Europäisches Patentamt

European Patent Office

Office européen des brevets

(11) Veröffentlichungsnummer: **0 385 947**
**A1**

## (12) EUROPÄISCHE PATENTANMELDUNG

(21) Anmeldenummer: 90810136.3

(22) Anmeldetag: 23.02.90

(51) Int. Cl.5: **B01D 69/12, B01D 69/10, B01D 53/04**

(30) Priorität: 01.03.89 CH 745/89

(43) Veröffentlichungstag der Anmeldung:
05.09.90 Patentblatt 90/36

(84) Benannte Vertragsstaaten:
AT BE CH DE DK ES FR GB GR IT LI LU NL SE

(71) Anmelder: ALUSUISSE-LONZA SERVICES AG
Feldeggstrasse 4
CH-8034 Neuhausen am Rheinfall(CH)

(72) Erfinder: Werner, Martin
Hansjakobstrasse 16
D-7700 Singen(DE)
Erfinder: Oerkenyi, Geza
Neustrasse 23
CH-8247 Flurlingen(CH)
Erfinder: Franschitz, Wilhelm
Büchelerstrasse 12
CH-8212 Neuhausen(CH)
Erfinder: Sekinger, Kurt
Josefstrasse 150
CH-8005 Zürich(CH)

(54) Verfahren zur Verbesserung der Permeabilität bei der Trennung gasförmiger Gemische durch eine Kompositmembran und dessen Anwendung.

(57) Bei einem Verfahren zur Trennung eines gasförmigen Gemisches mit mindestens zwei Komponenten mit Hilfe einer Kompositmembran, bei dem die durch die Membran durchtretende Komponente einen relativ hohen Siedepunkt besitzt, besteht die Gefahr einer Kondensation dieser Komponente in der permeatseitigen Porenstruktur der Stützschicht der Membran. Dieser Nachteil wirkt sich ungünstig auf den Trennprozess aus, indem der Widerstand des Transmembranflusses erhöht wird und/oder es zu einer Zerstörung der Membranstruktur oder des Membranmaterials führen kann.

Diese Nachteile können durch die Verwendung einer beheizten Kompositmembran vermieden werden.

## Verfahren zur Verbesserung der Permeabilität bei der Trennung gasförmiger Gemische durch eine Kompositmembran und dessen Anwendung

Die Erfindung betrifft ein Verfahren zur Verbesserung der Permeabilität bei der Trennung eines gasförmigen Gemisches mit mindestens zwei Komponenten mit Hilfe einer Kompositmembran.

Kompositmembranen werden unter anderem zur Trennung gasförmiger Gemische verwendet. Bei der Trennung von gasförmigen Gemischen, bei denen die durch die Membran durchtretende Komponente, z.B. ein organisches Lösungsmittel, einen relativ hohen Siedepunkt besitzt, besteht die Gefahr einer Kondensation dieser Komponente in der permeatseitigen Porenstruktur des Stützgerüstes bzw. der Stützschicht der Membran. Dieser Nachteil wirkt sich ungünstig auf den Trennprozess aus, indem der Widerstand des Transmembranflusses erhöht wird und/oder es zu einer Zerstörung der Membranstruktur oder des Membranmaterials führen kann.

Angesichts dieser Gegebenheiten haben sich die Erfinder die Aufgabe gestellt, die Permeabilität bei der Trennung gasförmiger Gemische mit mindestens zwei Komponenten derart zu verbessern, dass die vorerwähnten Nachteile nicht oder nur in sehr geringem Masse auftreten.

Erfindungsgemäss wird die gestellte Aufgabe durch ein Verfahren gelöst, welches sich nach dem Merkmal des Anspruchs 1 kennzeichnet. Weitere vorteilhafte Merkmale des Verfahrens ergeben sich aus den Ansprüchen 2 bis 9. Anspruch 10 gibt die bevorzugte Anwendung des erfindungsgemässen Verfahrens an.

Eine heizbare Membran für die Pervaporation ist beispielsweise aus der DE-OS 35 18 871 bekannt, wobei über direkte Beheizung der Membran die Verdampfungswärme für die Umwandlung vom flüssigen Zustand in den gasförmigen Zustand zugeführt wird.

Ueberraschenderweise wurde von den Vorteilen einer beheizten Membran, nämlich Erzeugung der Wärme am Ort der Notwendigkeit und damit einer wirtschaftlichen Verfahrensführung, bei der Trennung gasförmiger Gemische bisher nicht Gebrauch gemacht.

Für zwei Komponenten A,B ergeben sich unterschiedliche Abhängigkeiten der Löslichkeit und des Diffusionskoeffizienten und damit der Permeabilität und/oder Selektivität von der Temperatur. Für ein zu trennendes Gasgemisch unter Verwendung nach dem erfindungsgemässen Verfahren kann der Trennprozess in die Komponenten des Gemischs bei einer bestimmten Temperatur unter optimal wirtschaftlichen Bedingungen durchgeführt werden. Diese Temperatur liegt im allgemeinen über der Raumtemperatur. Der Transmembranfluss, z.B. im Falle eines Luft/Lösungsmitteldampfgemisches, hängt in der Praxis nicht nur von den Membraneigenschaften, sondern auch vom Verhältnis der Partialdrücke auf der Feed-und Permeatseite ab. Ein niedriger permeatseitiger Partialdruck wirkt sich günstig auf den Trennprozess aus. Durch Temperaturerhöhung nach dem erfindungsgemässen Verfahren erhöht sich zwar der Partialdruck der betreffenden Trennkomponente, gleichzeitig wird jedoch durch das Ausbleiben von möglicher Kondensatbildung ein besserer Transmembranfluss erreicht.

Das erfindungsgemässe Verfahren hat den Vorteil, dass in Folge der Beheizung die Kondensation und damit die Löslichkeit der permeierenden Stoffe in dem selektiven Membranmaterial und damit auch ein Quellen desselben unterbunden wird, wodurch die Poren des Materials im Gegensatz zum Vorhandensein von Kondensationsprodukten nicht mehr enger wer nen können und damit auch kein kleinerer Transmembranfluss wegen des erhöhten Widerstandes auftreten kann. Des weiteren kann bei dem erfindungsgemässen Verfahren wegen Wegfall der eben angesprochenen nachteiligen Erscheinungen keine Korrosion der Membran und damit auch keine Zerstörung durch Auflösung des Membranmaterials erfolgen.

Das erfindungsgemässe Verfahren ist besonders geeignet zur Trennung und Rückgewinnung organischer Lösungsmittel aus diese enthaltender Luft. Ferner eignet es sich zur Trennung von $N_2/O_2$ - und/oder $H_2/NH_3$ - und/oder $CO_2/CH_4$ - Gemischen. Selbstverständlich ist die Selektivität von der Temperatur abhängig. Durch das erfindungsgemässe Verfahren kann eine optimale Prozessführung in sehr einfacher Weise dadurch herbeigeführt werden, dass die Temperatur direkt an der Trennphasengrenze, nämlich an der Membran optimiert wird.

### Ansprüche

1. Verfahren zur Verbesserung der Permeabilität bei der Trennung eines gasförmigen Gemisches mit mindestens zwei Komponenten mit Hilfe einer Kompositmembran,
dadurch gekennzeichnet, dass
eine direkt beheizte Kompositmembran verwendet wird.

2. Verfahren nach Anspruch 1, dadurch gekennzeichnet, dass die direkt beheizte Kompositmembran eine metallische poröse Stützschicht und eine geschlossene selektive Schicht aufweist.

3. Verfahren nach Anspruch 2, dadurch gekennzeichnet, dass die metallische Stützschicht aus Aluminium besteht.

4. Verfahren nach Anspruch 3, dadurch gekennzeichnet, dass die Aluminiumschicht eine geätzte Aluminiumfolie ist.

5. Verfahren nach Anspruch 2, dadurch gekennzeichnet, dass die metallische Stützschicht durch Aufdampfen von Metall, insbesondere von Aluminium, auf die selektive Schicht hergestellt ist.

6. Verfahren nach einem der Ansprüche 2 bis 5, dadurch gekennzeichnet, dass die Metallschicht mit einer Oxidschicht versehen ist.

7. Verfahren nach einem der Ansprüche 1 bis 6, dadurch gekennzeichnet, dass die selektive Schicht eine homogene Polymerschicht ist.

8. Verfahren nach Anspruch 7, dadurch gekennzeichnet, dass bei Verwendung eines hydrophoben Polymers als selektive Schicht die Poren der porösen Stützschicht zur Verhin derung des Eindringens hydrophober Polymerlösungen während des Beschichtungsvorganges in die Porenstruktur hydrophilisiert sind.

9. Verfahren nach einem der Ansprüche 1 bis 7, dadurch gekennzeichnet, dass die selektive Schicht eine Silikonschicht ist.

10. Anwendung des Verfahrens nach einem der Ansprüche 1 bis 9, zur Trennung und Rückgewinnung organischer Lösungsmittel aus diese enthaltender Luft.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 601 425 (FRAUNHOFER-GESELLSCHAFT ZUR FÖRDERUNG DER ANGEWANDTEN FORSCHUNG e.V.) * Das ganze Dokument * & DE-A-3 518 871 (Kat. D,X) --- | 1,2,7 | B 01 D 69/12 B 01 D 69/10 B 01 D 53/04 |
| X | US-A-3 608 610 (J.L. GREATOREX) * Spalte 4, Zeilen 27-41; Spalten 7,8; Ansprüche 1-6 * --- | 1,2,7 | |
| A | EP-A-0 067 116 (M. LAUFFER) --- | | |
| A | DE-A-3 434 150 (W.T. SHMAYADA et al.) ----- | | |

RECHERCHIERTE SACHGEBIETE (Int. Cl.5)

B 01 D

Der vorliegende Recherchenbericht wurde für alle Patentansprüche erstellt

| Recherchenort | Abschlußdatum der Recherche | Prüfer |
|---|---|---|
| DEN HAAG | 30-03-1989 | PYFFEROEN K. |